Europäisches Patentamt

European Patent Office

Office européen des brevets

(11) Publication number: **0 287 918**
**A1**

# (12) EUROPEAN PATENT APPLICATION

(21) Application number: **88105734.3**

(22) Date of filing: **11.04.88**

(51) Int. Cl.⁴: **F41H 5/04**

(30) Priority: **13.04.87 US 37673**

(43) Date of publication of application:
**26.10.88 Bulletin 88/43**

(84) Designated Contracting States:
**BE CH DE FR GB IT LI LU NL SE**

(71) Applicant: **CEMCOM CORPORATION**
**10123 Senate Drive**
**Lanham Maryland 20706(US)**

(72) Inventor: **Double, David D.**
**Welcheston House Hurstbourne Tarrant**
**NR. Andover Hampshire(GB)**
Inventor: **Bright, Randall P.**
**14913 London Lane**
**Bowie Maryland 20715(US)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40(DE)**

(54) **Chemically bonded ceramic armor materials.**

(57) Armor materials are disclosed which include compositions comprising the components:
(1) a high strength chemically bonded ceramic, and
(2) an additional constituent comprising
(a) fibers that increase the fracture toughness and multi-hit capability of the armor materials, and/or
(b) hard aggregates which blunt, deflect and/or erode penetrators that strike the armor.
The disclosed armor materials also include compositions which utilize component (1) or a mixture of components of (1) and (2) as a matrix in multi-component systems. The multi-component systems comprise elements or segments of various shapes, sizes and materials.

*FIG. 1*

# CHEMICALLY BONDED CERAMIC ARMOR MATERIALS

## Background of the Invention

### Field of Invention

This invention is in the field of improved armor materials for military purposes.

It is increasingly difficult to defend against the destructive forces of projectiles being developed for the penetration and destruction of current armor materials. These projectiles are referred to as ballistic threats or simply "threats". Modern threats cover a wide range of characteristics. They vary in size and type and have impact velocities from a few hundred meters per second to several thousand meters per second. Types include ball projectiles, fragment simulating projectiles (FSP), armor piercing (AP) projectiles, self-forging fragments (SFF), and fin stabilized long rod kinetic energy (KE) penetrators and chemical energy (CE) shaped charge jets.

Shaped charge jets use a shaped charge of high explosive to focus and inject a narrow jet of metal at extremely high velocity into the target. While the penetration effectiveness of KE projectiles depends mainly on the mass, hardness, geometry and velocity of the projectile, the shaped charged jet relies on the extremely high temperature and pressure of the metal jet to penetrate the target by hydrodynamic flow and erosion. With such penetrators, damage is done not only by the missile itself but is enhanced by material ejected by rear face spalling and fragmentation of the armor plating.

To meet these threats, exceptional mechanical and physical properties are required in armor materials. Current armors include toughened metal alloys, fiber reinforced plastics and high technology ceramic materials. Engineering design of armor systems has been an important factor. Many modern armors are multicomponent systems, using several plates of different materials bonded together in order to exploit the individual material properties to best advantage. Other more complex designs have been developed. Spaced armor systems and oblique-louvered armor systems, for example, are effective against high velocity projectiles because they deflect and destabilize the path of incoming penetrators.

Metals such as steel and aluminum are the major armor materials used today. An important major area of armor development has been in fiber reinforced plastic materials (FRP), which are laminated composites bonded with resin (glass, nylon, aramid, boron, carbon fibers, and the like). Used alone, FRP's offer good ballistic performance and low weight characteristics in the lower energy projectile range. FRP's find applications in personnel armor for protection against handgun threats and blast fragments. In the higher energy projectile range, the performance of FRP laminates is limited by their relatively low modulus and temperature sensitivity. Their high resilience and fracture toughness, however, has been successfully utilized as sandwich layers or spall suppressant backing plates in multiplate armor systems.

Ceramics prepared by high temperature sintering methods (alumina, silicon carbide, beryllium oxide, boron carbide, etc.) represent one of the most important recent developments in armor materials. Their very high compressive strength and hardness, coupled with relatively low density, provide exceptional armor performance against a wide range of high energy ballistic threats including AP projectiles, KE rods and jet penetrators. Ceramics are currently the subject of intensive research and improvement. The field applications of ceramic armors, however, have been limited by the high material cost and the difficulty of fabricating them into shapes other than fairly simple tile geometries. Large monolithic sections are not possible and ceramic armors mostly employ an applique tile cladding arrangement. In spite of their strength and hardness, ceramics are brittle and a tile will shatter completely if subjected to a projectile impact of sufficient energy. To mitigate the effects of fragmentation and spalling, the ceramic tiles are generally bonded to metal or FRP backing plates. Even so, the ceramic tile is destroyed and in field situations would need to be replaced. This is in contrast to metal armors, for example, which can sustain several shots in fairly close proximity without significant loss in armor integrity.

Cermets, such as aluminum-boron carbide, combine some of the best properties of both metals and ceramics and thus offer considerable potential as ballistic armor materials. They have been shown to provide good ballistic protection against AP threats. Since, however, fabrication involves hot pressing and sintering, they have similar limitations as ceramics in formability and cost.

## Prior Art

PCT publication WO 80/00959, published May 18, 1980, discloses a cementitious product comprising Portland cement, silica dust, sands such as quartz and granite, a cement superplasticizer and water. This publication discloses the addition of particles to densify the Portland cement, but does not disclose the concept of involving the additives in a pozzolanic reaction.

U.S. Patent No. 4,505,753 discloses a cementitious composite material comprising Portland cement, finely divided silica fillers, a superplasticizer, water and optionally an antifoaming agent. This material has unusually high strength characteristics as compared to standard cements.

U.S. Patent No. 4,482,385 discloses still another cementitious composite material comprising Portland cement, finely divided silica fillers, a superplasticizer, water, a foaming agent, and irregularly shaped stainless steel particles. The latter composite material has not only unusual strength characteristics, but also vacuum integrity and unusual thermal properties.

Copending application Serial No. 894,815, filed August 8, 1986, discloses that metal fibers can be combined with the cementitious materials of the above-numbered U.S. patents to provide friction compositions.

Copending application Serial No. 945,632, filed December 23, 1986, discloses that fibers and aggregates can be combined with cementitious materials to provide molds and tools useful for metal and plastic forming operations.

The use of steel fibers to reinforce concrete has been disclosed such as in "New Swedish Technology", Volume 5, No. 3 (1986). But the steel fibers are relatively long, having lengths up to 30-40 millimeters. Fiber reinforced concrete is also disclosed in Fibre Cements and Fibre Concrete, by D. J. Hannant (1978) John Wiley & Sons.

A report published by the Engineering & Services Laboratory, Air Force Engineering & Services Center, Tyndall Air Force Base, Florida in March, 1986, discloses that armor plates made of a composition of calcium aluminate cement, hydrolyzed polyvinyl acetate polymers and water exhibited "catastrophic brittle failures". Nylon-mesh-reinforced panels were said to perform considerably better, but were still not impressive. The report mentions composite plates with a ceramic facing and several layers of the reinforced plates laminated together, but reported that has not yet been tried.

Accordingly, the objective of the present invention is to provide novel armors that are easier and less costly to make and that are more resistant to the modern threats than are the currently available armor materials.

Another object of the invention is to provide armor materials with improved resistance to impact penetration as a result of higher strength, greater hardness and additional fracture toughness.

A further object of the invention is to provide armor materials with lower density, lower combustibility, greater ease of installation and repair and lower material costs.

## Summary of the Invention

The novel armor materials of the invention include compositions comprising the components:
(1) a high strength chemically bonded ceramic, and
(2) an additional constituent comprising
   (a) fibers that increase the fracture toughness and multi-hit capability of the armor materials, and/or
   (b) hard aggregates which blunt, deflect and/or erode penetrators that strike the armor.

The armor materials of the invention also include compositions which utilize component (1) or a mixture of components (1) and (2) as a matrix in multi-component systems. The multi-component systems comprise elements or segments of various shapes, sizes and materials.

## Brief Description of the Drawings

Figure 1 shows a cross-sectional view of a multicomponent armor comprising a laminate including a high strength chemically bonded ceramic layer.

Figure 2 shows a cross-sectional view of an armor plate comprising hard aggregates dispersed in a high strength chemically bonded ceramic matrix.

Figure 3 shows a cross-sectional view of another multicomponent armor comprising hard plates embedded in a high strength chemically bonded ceramic matrix.

Figure 4 shows a cross-sectional view of still another multicomponent armor comprising metal shapes embedded in a high strength chemically bonded ceramic matrix.

Figure 5 is a graph showing a plot of ballistic limit determinations in terms of projectile velocity versus armor areal density.

Figure 6 is a photograph showing an armor plate after being struck by four projectiles.


Description of the Preferred Embodiments


(1) Chemically Bonded Ceramics


Chemically bonded ceramics are a new development in the field of high strength inorganic materials. These materials are composed of inorganic oxide systems, for example, metal oxide silicates, aluminates and phosphates, which are chemically blended and processed by special techniques designed to produce high strength and toughness. They differ from conventional ceramics in that strength develops by chemical bonding at ambient temperatures. No high temperature sintering or fusion processes are required to effect consolidation, as in the case of conventional ceramics.

The concept of chemically bonded ceramics has emerged from recent research into high strength cement materials. Although mostly based on conventional hydraulic cement systems, such as Portland cement and alumina cement, chemically bonded ceramics show mechanical properties which are far superior to those normally associated with ordinary cement products, such as mortars and concretes. Typically, compressive and tensile strengths are about an order of magnitude higher, with very substantial increases in fracture toughness. The high strengths are achieved by processing techniques designed to produce a compact microstructure of very low porosity, and by use of admixtures which contribute to strength during the hydraulic bonding process. These admixtures may include reactive filler powders, such as pozzolanic silica, as well as small amounts of organic and inorganic polymers. The polymers function not only as plasticizers and binders during processing, but also can enhance strength and toughness by chemical cross-linking with the cement.

The chemical and physical properties of chemically bonded ceramics lie between those of high technology conventional ceramics and those of low technology cement and concrete products. Chemically bonded ceramics share with ordinary cements the advantages of low material costs and low temperature economical processing methods, but coupled with mechanical properties which approach those of conventional ceramics and glasses.

Chemically bonded ceramics may be made as castable materials but the highest strengths are obtained using kneading and extrusion methods to mix and form the material. The techniques are in many ways similar to those used in processing plastic and rubber compounds, except that the procedure is carried out at ordinary temperatures. Strength development occurs spontaneously by curing under ambient conditions, but can be accelerated by oven drying (<80°C).

During manufacture, chemically bonded ceramics can readily be blended with various types of fillers and fibers to produce composite materials with improved physical and mechanical properties. The principles involved are similar to those used in plastic based composites. Chemically bonded ceramics are stronger and stiffer than plastic ceramics, however, and they have superior temperature stability and non-flammability. Since high temperatures are not involved, composites can be made with temperature sensitive reinforcing materials, such as low melting plastic fibers. This is not possible for high temperature ceramics such as ceramics and metals. Even the relatively modest temperatures involved in curing plastic resins can provide limitations in cost and manufacturing terms. The low temperature processability of chemically bonded ceramics even allows the possibility of incorporating heat sensitive materials.

In general, chemically bonded ceramics represent an emergent technology offering new types of inorganic based composites with a unique set of property advantages, processable at low temperatures, and produced at relatively low cost.

The present invention, utilizes high strength chemically bonded ceramics which in the final cured composite exhibit a flexural strength of at least about 20 MPa, but which on the average can be as high as 35 to 70 MPa and higher; and a pressive strength of at least about 100 MPa, but which on the average can be 200 to 300 MPa and higher.

A wide variety of inorganic materials may be used to develop the high strength chemically bonded ceramics in the composites of the present invention. The high strength materials can be based on one or more of the following:

    1. hydraulic cementitious systems such as:
        (a) high alumina cements, and
        (b) silica based cements, e.g., Portland cements;
    2. polymer treated cements, such as:
        (a) polymer modified cements, and
        (b) polymer impregnated cements; and
    3. other cementitious systems such as:
        (a) phosphate based cements, and
        (b) cement forming ceramic compounds, e.g., metal oxides combined with silicates, aluminates, phosphates, sulfates, carbonates, and combinations thereof.

Examples of high strength chemically bonded ceramic matrices include those described in the following United States Patents Nos. 4,353,748; 4,410,366; 4,482,385; 4,501,830 and 4,505,753, the disclosures of which are incorporated herein by reference, and in numerous other patents and publications.

In addition, the high strength chemically bonded ceramic material can include the additives disclosed in the five above-noted U.S. patents. For example, as described in U.S. Patent No. 4,505,753, the cement is preferably Class H Portland cement, mixed with a crystalline form of silicon dioxide of a general size of finer than 5 microns, silica fume and a superplasticizer. U.S. Patent No. 4,482,385 describes a matrix comprising Class H Portland cement, Min-U-Sil silica particles, silica fume and a superplasticizer. A stainless steel constituent is also employed. As described in U.S. Patent No. 4,410,366, the cement is a high alumina cement and a water dispersable or water soluble polymer or copolymer. Preferred proportions of components are disclosed in these patents.

The matrix materials useful in this invention include the phosphate bonded matrices which may comprise the following:

|  | Weight Percent | |
|---|---|---|
|  | General | Preferred |
| Calcium Aluminates | 0 - 75 | 25 - 75 |
| Calcium Silicates | 0 - 75 | 25 - 75 |
| Calcium Alumino-Silicate | 0 - 75 | 25 - 75 |
| Alumina, or Alumino-Silicate | 0 - 65 | 10 - 65 |
| Calcium and/or Magnesium Oxide | 0 - 65 | 10 - 65 |
| Alkali Polyphosphates | 0 - 25 | 8 - 25 |
| Phosphoric Acid | 0 - 25 | 8 - 25 |
| Buffered Phosphate Solution | 0 - 25 | 8 - 25 |

(2) Additive Components

## (a) Fiber

A component of the armor material of the invention may comprise a fiber constituent. The fibers provide increased strength and toughness that reduces or eliminates armor fragmentation and provides excellent multi-hit capability.

The fibers may comprise metal fibers, mineral fibers, and organic fibers. The fibers can be randomly dispersed or oriented.

The fiber reinforcement comprises fibers having a length greater than 2 millimeters and with an aspect ratio (length/width) greater than 10. In several embodiments, the fibers are 5 to 15 millimeters in length with an average width or cross-section from 10 to 200 microns. These are average dimensions. The fibers can have a broad distribution of lengths and widths or cross-sections, such that up to about 30 percent of the fibers may be outside the above-mentioned ranges. It is preferred that the fibers have a variable cross-section along the length of the fibers. This irregularity improves keying of the fibers into the matrix material. Though not restricted to this range, the modulus of the fibers generally exceed about 7 GPa, and often are higher than 70 GPa.

The fibers can be made of stainless steel, but other metals and alloys such as those of iron, nickel, chromium, tungsten and molybdenum can be used. Mixtures of such fibers can be used. The fibers can be razor cut from a metal wire and chopped. The metal fibers can be produced as "steel wool" and chopped to the desired size. Chopped steel wool that is commercially available in short lengths (about 2 to 15 millimeters) can be used. Wires or ribbons of plain carbon steels like SAE 1020 are suitable. Melt extracted fibers are also suitable. Fibers made by this method are manufactured by Ribbon Technology Corporation (RibTec).

Suitable fibers also include mineral fibers such as fibers of glass, mineral wool or carbon or graphite or ceramics such as alumina, boron carbide and silicon carbides. Synthetic resin fibers include aramid fibers. These may be used in place of some or all of the metal fiber constituent. Typical synthetic resin fibers include Kevlar 29 and 49 aramid polymers. The non-metallic fibers provide an excellent combination of low density, high strength and high modulus. Fibers with high temperature resistance are preferred.

The fiber component is generally employed in a proportion of about 0 to about 60 volume percent based on the volume of the composite mixture of the invention, usually about 2 to about 40 volume percent, preferably about 5 to 20 volume percent, and more preferably about 8 to 12 volume percent.

## (b) Aggregate

A constituent of the chemically bonded ceramic composite can be an aggregate which serves to blunt, deflect, erode or otherwise stop projectiles that strike the armor. The aggregate also enhances the strength and hardness of the composite and increases the compaction of the product. The aggregate comprises hard pieces that can be regular or irregular in shape. Stainless steel and other steel aggregates or pieces, as well as titanium or tungsten aggregates or pieces, can be used. In addition, ceramics of high hardness, such as glass, alumina, beryllium oxide, silicon carbide and boron carbide can be used. Mixtures of the various aggregates or pieces can be used.

To be effective the aggregate component should be a hard material, generally having a Mohs hardness value of greater than 5.

In the composites of the invention, the chemically bonded ceramic component has a high rigidity and bonds the aggregates or pieces together. To deflect or blunt a sharp projectile efficiently, the chemically bonded ceramic component should provide effective bonding to the aggregates or pieces, and constraint against movement under impact. To gain maximum results, the aggregates or pieces can be graded in size to achieve optimum packing density. The maximum size aggregates or pieces should generally be larger than the cross-sectional size of the impacting projectile. Typical diameters of KE and CE penetrators vary from 0.1 inch to several inches.

The aggregates or pieces are employed in a proportion of about 0 to about 60 volume percent based on the volume of composite material of the invention, preferably about 25 to about 45 volume percent.

### (3) Multicomponent Systems

Armor design is particularly important in counteracting high energy penetrators. Because of their toughness and multi-hit capability, fiber reinforced chemically bonded ceramic armors are useful as spall-suppressor plates in multi-layer armor systems, as a lower cost alternative to fiber reinforced plastics.

The easy formability of chemically bonded ceramic materials provides other opportunities. Plates of conventional ceramics can be embedded in a matrix of chemically bonded ceramics. A louvered arrangement of plates enhances deflection of the projectile. Apart from the intrinsic ballistic protection provided by the chemically bonded ceramic, the performance of the conventional ceramic plates is enhanced by synergistic effects. The chemically bonded ceramic matrix, by virtue of its relatively high strength and modulus, restrains the volume dilation that accompanies fragmentation of the conventional ceramic plate.

In another embodiment, spaced metal grilles can be used to deflect projectiles by assymmetric loading during penetration. The performance of the grille structure is enhanced by the support and restraint provided by the matrix of chemically bonded ceramics. A variety of metal shapes can be employed. These systems can readily be made by intrusion forming the chemically bonded ceramic matrix around the other components.

The systems described above provide examples of the versatility of chemically bonded ceramics. This versatility even extends to the matter of repair, after penetration or cratering by a projectile. Cements are, in any case, used for repair of armored vehicles and the higher strength chemically bonded ceramics provide a method of achieving such repairs more effectively and efficiently.

### Detailed Description of the Drawings

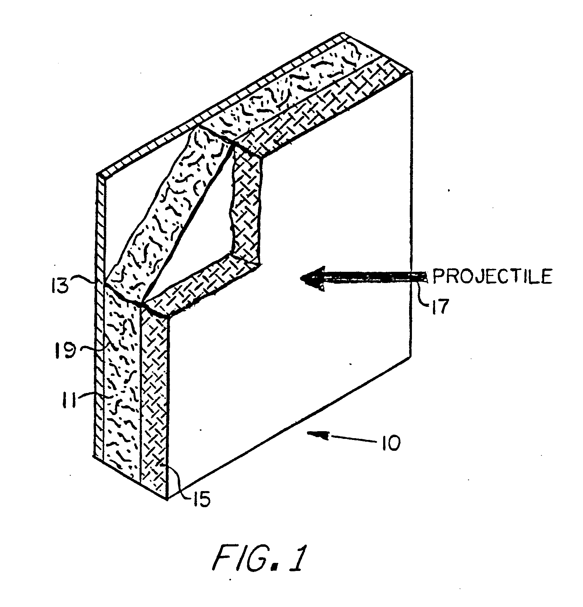

Figure 1 shows a cross-sectional view of one embodiment of a multi-component armor 10. In this laminated embodiment, a chemically bonded ceramic plate 11 has a conventional ceramic plate 15 adhered on the side of the armor facing projectile 17. To the opposite side of plate 11 is attached metal backing plate 13. The chemically bonded ceramic plate 11 may include reinforcing fibers 19 which have the function of increasing the strength and fracture toughness of the composite armor plate and to suppress spall fragmentation.

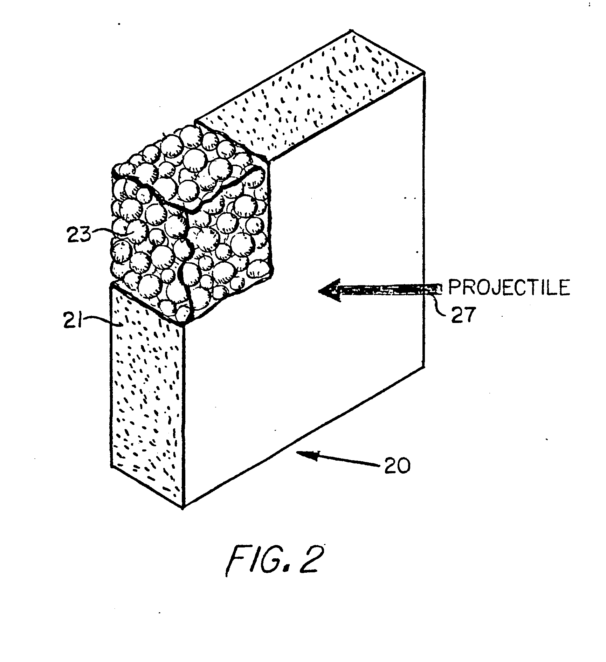

Figure 2 depicts a cross-sectional view of a composite armor plate 20 which contains hard conventional ceramic or glass aggregates or pieces 23 which are bonded together by chemically bonded ceramic matrix 21. The ceramic or glass pieces because of their impact dilatancy, serve to deflect the projectile 27 The ceramic aggregates or pieces 23 of high hardness serve to blunt or erode a sharp projectile very efficiently. Preferably, these aggregates or pieces are graded in size to achieve an optimum packing density.

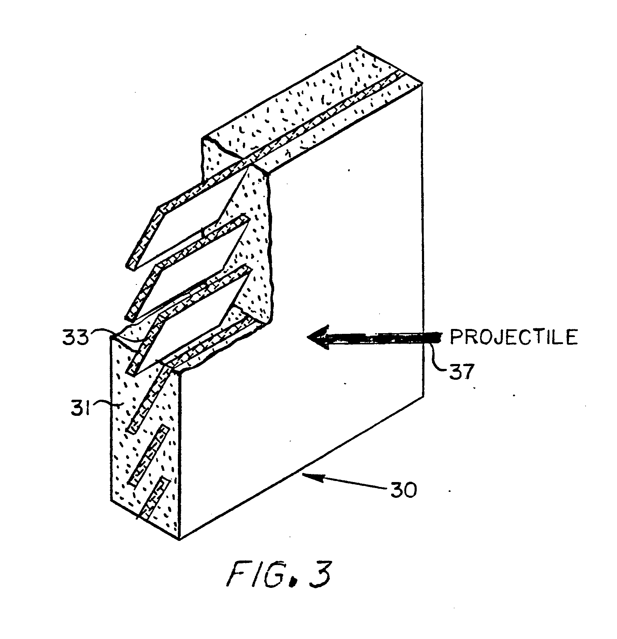

Figure 3 shows an embodiment of a multi-component armor 30 which has a chemically bonded ceramic matrix 31 Embedded in the matrix 31 are conventional ceramic plates 33 which are positioned at an angle to the direction of projectile 37. This embodiment has the advantage that a projectile 37 striking the armor plate 30 is deflected by the hard ceramic plates 33, and hence does not penetrate the armor plate 30.

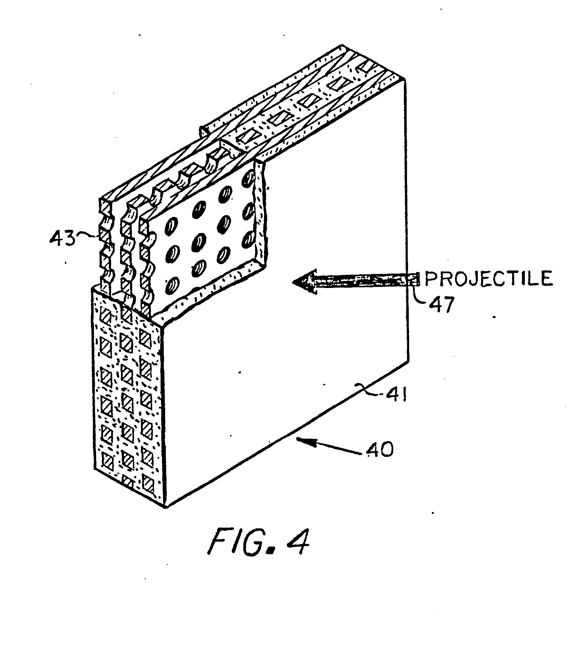

Figure 4 shows an embodiment of the multi-component armor of the invention. The armor plate 40 has a chemically bonded ceramic matrix 41 in which is embedded a set of metal grilles 43 which can have a variety of shapes and configurations. The purpose of metal grilles 43 is to deflect, tumble, and/or shatter projectile 47 when it impacts the armor plate 40, due to off-center loading during penetration.

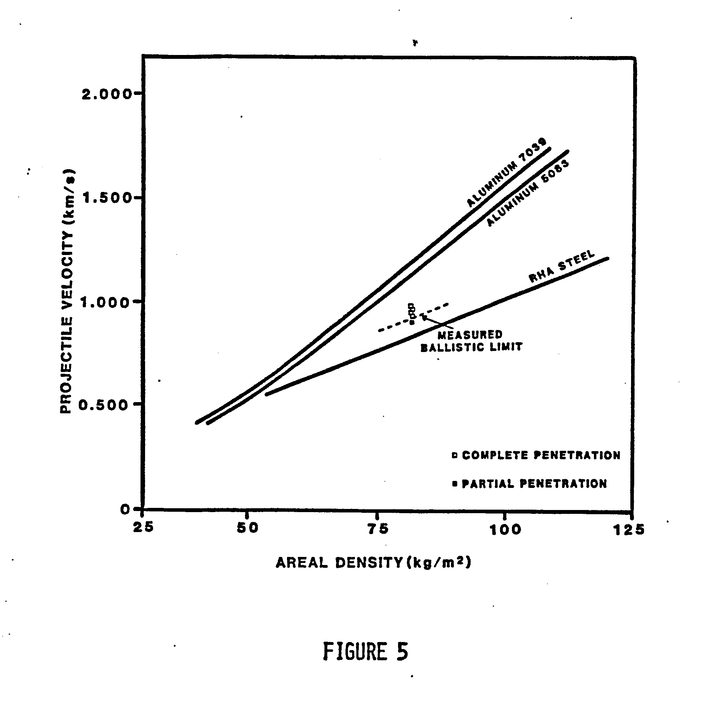

Figure 5 is a graph showing a plot of ballistic performance of armor materials of the invention compared with aluminum armor and RHA armor. Ballistic limit determinations were plotted in terms of projectile velocity versus armor areal density, as described in Example 6.

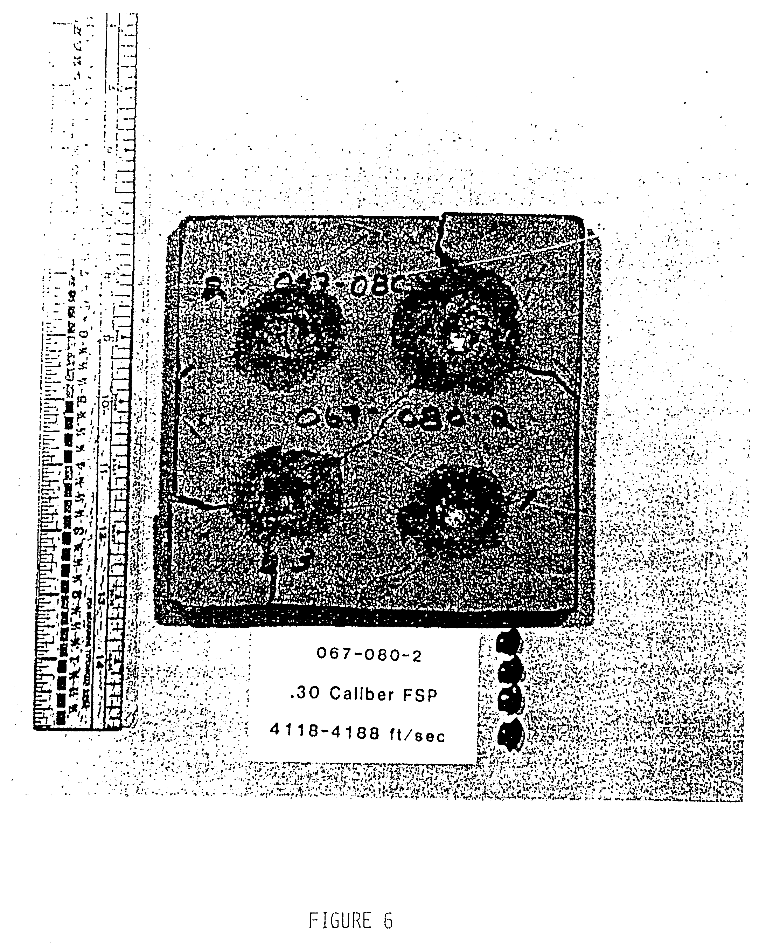

Figure 6 is a photograph of an armor plate of the invention as described in Example 5(b). The photograph shows the results of the armor being struck by four projectiles, as described in Example 5(b).

## Examples

In the following examples and throughout the specification and claims, parts are by weight and temperatures are in degrees Celsius, unless indicated otherwise.

In these Examples, the ballistic testing was accomplished using Fragment Simulating Projectiles (FSPs). These projectiles are cylinders having blunt, chisel-shaped noses and raised flanges at their bases to act as gas seals and rotating bands. The projectiles were hardened to Rockwell C30 and manufactured according to Military Specification MIL-P-46593A. This hardness level represents the average hardness of recovered fragments of detonated 20mm, 37mm and 105mm high explosive shells. FSPs are generally accepted for testing of aluminum, thin gauge steel, and non-metallic armors.

The 0.30 caliber FSPs and the 0.50 caliber FSPs were accelerated using standard 0.30 and 0.50 caliber rifled barrels respectively. Measurement of the projectile velocity in the 0.30 and 0.50 caliber ranges was accomplished using two light screens situated along the range.

Ballistic testing for a number of specimens was carried out using 0.30 caliber FSPs at velocities ranging between 1.251 to 1.354 km/sec. During the test, the target was bonded to a 1.27 cm thick aluminum backplate and clamped to a thick aluminum baseplate so that the penetration into the aluminum target would not be affected by rear surface bulging. Evaluation was made of the damage sustained by the target, as well as total penetration of the projectile.

In order to better discriminate among the chemically bonded ceramic materials, the range of projectile velocities was chosen so that the velocities were sufficiently high to cause complete penetration through the chemically bonded ceramic frontplate, but not high enough to result in penetration through the aluminum backplate to which it was bonded.

In order to obtain quantitative measurements of the ballistic performance of the chemically bonded ceramic plates, a method originally described by Yaziv et al was employed. Essentially, this involves comparing the stopping power of the biplate to that of a reference block of 6061-T6 aluminum. The stopping power of the chemically bonded ceramic plate was obtained by measuring the thickness of the chemically bonded ceramic plate (t) and the depth of the residual penetration (p) of the projectile into the aluminum backplate. These values were then related to the depth of penetration (x) at the same projectile velocity into aluminum reference block.

The stopping power (SP) is then defined as:

$$\text{Stopping Power SP} = \frac{(x - p)}{t}$$

In order to take into account the differences in target weight, the stopping efficiency (SE) is defined as follows:

$$\text{Stopping Efficiency} \quad SE = SP \; X \; \frac{\text{Density of Aluminum}}{\text{Density of Test Armor}}$$

The stopping efficiency is analogous to the "weight merit rating" that is conventionally used to characterize armor performance. If SE = 1.0, the performance is equal to aluminum. If SE is less than 1.0, the armor is less effective than aluminum. If SE is greater than 1.0, the performance is better than aluminum.

One specimen was also tested for ballistic limit. The ballistic limit velocity, usually designated $V_{50}$, is defined as the velocity at which 50% of the impacts would result in a complete penetration of the target. A complete penetration occurs when a fragment from the rear of the armor has sufficient energy to create a hole that will pass light in an 0.5 mm 2024-T3 aluminum witness plate situated 15.24 cm behind the target. Any impact which rebounds from the target, imbeds in the target, or passes through with insufficient energy to pierce the witness plate, is designated as partial penetration. The $V_{50}$ limit is computed as the average of the lowest velocity complete penetration and highest velocity partial penetration.

Examples 1 to 5

In Examples 1 to 5, the compositions shown in Table 1 are fabricated to provide a comparative assessment of ballistic performance using high strength aluminate-based chemically bonded ceramics and various kinds of reinforcement. Example 1 is essentially a chemically bonded ceramic matrix without reinforcement. Example 2 utilizes the same matrix and hard alumina aggregate particles selected for their hardness and strength. In Example 3 the chemically bonded ceramic matrix is reinforced with short steel fibers. In Examples 4 and 5 longer steel fibers are used for reinforcement.

The components shown in Table 1 were mixed in the proportions shown in Table 1. The formulations were processed by mixing in a Sigma blade kneader/extruder. The formulations were rolled into a thin sheet and cut to shape, and then pressure formed at 13.8 MPa in a die measuring 15.25 cm by 15.25 cm. Strength development was achieved during curing at ambient temperature over 24 hours and after accelerated drying at 65°C.

After curing, the resulting plates were bonded to a 1.27 cm thick plate of 6061-T6 aluminum using an epoxy adhesive. The armor plates were then tested for ballistic performance and the results are shown in Table 2.

In Example 1, with a flexural strength of 85 MPa, a stopping power of 0.69 and a stopping efficiency of 0.75 was achieved against a 0.30 caliber FSP at 1.251 km/sec. The plate was completely fragmented on impact. Under similar ballistic impact, Example 2 containing alumina aggregates gave a stopping power of 0.69 and a stopping efficiency of 0.71, also with fragmentation of the plate. The reduction in stopping efficiency relative to Example 1 is due to the increased density of Example 2. Against this particular type of blunt projectile (0.30 caliber FSP), the addition of alumina aggregates has not had a beneficial effect on ballistic performance, although an improvement in ballistic performance should be achieved against sharp-nosed projectiles because of the blunting affect of the hard alumina particles.

In Example 3, which contains 35 percent by weight of short steel fibers, the stopping power is again 0.69 and the stopping efficiency is reduced to 0.63. This reduction in stopping efficiency is due to the increased density of the steel, but the major advantage of Example 3 is that the steel fiber has increased the impact strength and toughness so that fragmentation of the plate does not occur. In Example 3, the test plate was fractured into two pieces.

In Examples 4 and 5, to further improve fracture toughness, steel fibers of a different type were used with a length more than three times that used in Example 3. Example 4 contains approximately 4 weight percent, and Example 5 contains approximately 24 weight percent of these fibers. In spite of the extra weight due to the steel fiber addition, the ballistic performance of Examples 4 and 5 as indicated by the values of stopping power and stopping efficiency were significantly enhanced in comparison with the Examples 1 to 3. In Example 4 the stopping powers were between 0.83 and 0.85; the stopping efficiency was between 0.94 and 0.93. After the impact, the plates remained intact, although they contained radial cracks. In Example 5, the stopping power ranged from 0.74 to 0.80 and stopping efficiency ranged from 0.74 to 0.81. Although these values are lower than those of Example 4, the major advantage of increasing the fiber content to 24 percent by weight was an increase in fracture toughness so that the plates remained intact after impact with no observable cracking beyond the central impact crater.

In Example 5(b), damage was minimized to the point that four successive 0.30 caliber shots at impact velocities in excess of 1.25 km/sec were sustained in a single 15.25 cm by 15.25 cm plate, as shown in Figure 6. The total area of the four spall craters was only about 30% of the surface area of the 15.25 cm by 15.25 cm test plate. This test specimen provided a very graphic example of the multi-hit capability of the material, in its ability to retain structural integrity on successive close proximity shots.

In summary, the results showed that the fiber reinforced chemically bonded ceramic plates had better stopping powers and stopping efficiencies than the unreinforced plates. In addition, the major advantage of the fiber additions was in lessening the tendency towards cracking and fragmentation, thus increasing the multi-hit capability of the material.

Example 6

A large test plate was prepared for 0.50 caliber ballistic testing using the formulation of Example 5 shown in Table 1 and following the procedures of Examples 1 to 5. The plate measured 30.5 cm × 30.5 cm and close to 1.8 cm thickness and was resin bonded to a 1.27 cm thick 6061-T6 aluminum backing plate.

The $V_{50}$ ballistic limit of the chemically bonded ceramic armor of the invention was compared with the efficiency of aluminum armor and RHA armor. The mass efficiency of an armor is the ratio of the areal density of the chemically bonded ceramic test armor compared to the areal density of aluminum or RHA steel at the same $V_{50}$ ballistic limit.

The plate was subjected to a series of five shots using 0.50 caliber FSPs at various graduated velocities to determine a value of the $V_{50}$ ballistic limit. The first shot at 0.902 km/sec resulted in partial penetration. The four following shots at velocities from 0.972 km/sec to 0.905 km/sec gave complete penetration. These tests indicated a ballistic limit for the chemically bonded ceramic/aluminum biplate of about 0.904 km/sec, at an areal density of 79.1 kg/square meter.

The test data are plotted as a function of projectile velocity and armor density in Figure 5, which also shows published values for the $V_{50}$ ballistic limits of RHA steel and aluminum armor. To defeat 0.50 caliber FSPs at 0.904 km/sec requires an areal density of 68.9 kg/square meter of 5083 aluminum, and 87.9 kg/square meter of RHA steel. The corresponding mass efficiencies of the chemically bonded ceramic biplate armor are as follows:

$e_m$ 0.87 (relative to 5083 aluminum)
$e_m$ 1.11 (relative to RHA steel).

The value obtained for the mass efficiency relative to aluminum is generally in accord with the values of the stopping efficiency obtained from 0.30 caliber FSP testing.

TABLE 1

| Components, Weight Percent | Example Numbers | | | | |
| --- | --- | --- | --- | --- | --- |
| | 1 | 2 | 3 | 4 | 5 |
| High Alumina Cement (a) | 59.47 | 33.77 | 36.23 | 55.90 | 42.65 |
| Calcined Alumina (-325 mesh) | 19.98 | 11.35 | 12.27 | 18.79 | 14.33 |
| Tabular Alumina (100 mesh) | | 19.99 | | | |
| Tabular Alumina (28/48 mesh) | | 19.99 | | | |
| Polyvinyl Alcohol (85% Hydrolyzed) (b) | 6.67 | 3.78 | 4.09 | 6.26 | 4.78 |
| 304 Stainless Steel Fiber (0.31" X 0.004") (c) | | | | 4.19 | 24.18 |
| 434 Stainless Steel Fiber (0.10" X 0.004") (d) | | | 35.07 | | |
| Glycerol | 0.57 | 0.32 | 0.35 | 0.54 | 0.41 |
| Water | 13.32 | 10.80 | 11.69 | 14.31 | 13.65 |

(a)  Secar 71, manufactured by Lone Star LaFarge
(b)  PVA 6000, 96,000 average molecular weight, manufactured by Monsanto Polymer Products Corporation
(c)  Manufactured by Ribbon Technology Corporation
(d)  Available through Markets and Products, Inc.

## TABLE 2

| Example No. | Properties of the Cement | | Areal Density kg/sq m | Impact Veloc. km/sec | Resid. Pentrn mm | Penetration into Al at this impact Velocity mm | Stopping Power | Stopping Efficncy | Comments |
|---|---|---|---|---|---|---|---|---|---|
| | Flex Strength MPa | Thick mm | | | | | | | |
| 1 | 85 | 12.2 | 30.3 | 1.251 | 4.90 | 13.35 | 0.69 | 0.75 | Plate Fragmented |
| 2 | 69 | 12.7 | 33.7 | 1.253 | 4.60 | 13.35 | 0.69 | 0.71 | Plate Fragmented |
| 3 | 95 | 12.09 | 38.1 | 1.257 | 5.10 | 13.40 | 0.69 | 0.63 | Fractured/2 pcs. |
| 4(a) | 56 | 12.70 | 31.7 | 1.278 | 2.84 | 13.65 | 0.85 | 0.93 ⎫ | Plate Intact/ 3 Cracks |
| (b) | | 11.68 | 28.8 | 1.372 | 5.08 | 14.80 | 0.83 | 0.92 ⎭ | |
| 5(a) | 64 | 10.92 | 28.8 | 1.354 | 5.84 | 14.55 | 0.80 | 0.81 | Plate Intact/ No Cracks |
| (b) | | 11.68 | 31.2 | 1.256 | 4.42 | 13.40 | 0.77 | 0.77 ⎫ | |
| | | | | 1.277 | 4.75 | 13.65 | 0.76 | 0.76 | Four Shots into Single Plate |
| | | | | 1.256 | 4.44 | 13.40 | 0.77 | 0.77 | |
| | | | | 1.264 | 4.83 | 13.50 | 0.74 | 0.74 ⎭ | |

0 287 918

Examples 7 to 12

The components shown in Table 3 are mixed in the proportions shown in Table 3. The formulations are processed by mixing in a Sigma Blade Kneader/Extruder. The formulations are rolled into a thin sheet and cut to shape, and then pressure formed at 13.8 MPa in a 15.25 cm by 15.25 cm die.

Strength development is achieved during curing at ambient temperature over 24 hours and after accelerated drying at 65°C.

After curing, the resulting plates are bonded to a 1.27 cm thick plate of aluminum using an epoxy adhesive. The armor plates are then tested for ballistic performance.

Examples 13 to 15

To provide a basis for comparison, several castable chemically bonded formulations of relatively lower flexural strength were tested. The compositions are shown in Table 4. Example 13 is an ordinary premixed concrete available commercially containing sand and gravel aggregates. This was prepared using conventional mixing and casting methods and formed into test plates approximately 15.2 × 15.2 × 1.3 cm in size. Examples 14 and 15 are higher strength chemically bonded ceramic composites, containing steel aggregates and steel fiber reinforcement, with fine silica filler material. These components were blended using conventional mixing and casting methods and formed into test plates approximately 15.2 × 15.2 × 2.5 cm in size. Curing of Examples 13-15 was carried out under

TABLE 3

| Components, Weight Percent | Example Numbers | | | | | |
|---|---|---|---|---|---|---|
| | 7 | 8 | 9 | 10 | 11 | 12 |
| High Alumina Cement (a) | 34 | | 30 | 53.2 | 52.4 | |
| Wollastonite (CaSiO$_3$) | | | | | | 31 |
| Calcined Alumina (-325 mesh) | | 11 | 9 | 17.9 | 17.6 | 13 |
| Tabular Alumina (28/48) | | 42 | 12 | | | |
| Magnesium Oxide | 17 | | | | | 19 |
| Sodium Hexametaphosphate | 17 | 13 | 15 | | | 15 |
| Buffered Phosphoric Acid Solution (b) | | | | | | |
| Polyvinyl Alcohol (85% Hydrolyzed) | | | | 6.0 | 5.9 | |
| Kevlar Aramid Fibers | | | | 5.4 | | |
| 304 Stainless Steel Fiber (0.31" X 0.004") | 22 | 22 | 23 | | | 22 |
| Carbon Fibers | | | | | 6.8 | |
| Glycerol | | | | 0.5 | 0.5 | |
| Water | 10 | 10 | 11 | 17.5 | 16.8 | |

(a) Secar 71, manufactured by Lone Star LaFarge

(b) Contains 65.6% of 85% phosphoric acid, 9.2% zinc phosphate, 8.2% aluminum phosphate, 0.4% magnesium phosphate and 16.6% of water. (All in weight percent)

moist conditions for 48 hours and Examples 14 and 15 were finally dried at 150°C.

After curing, the armor test plates were tested for ballistic performance and the results are shown in Table 5. Example 13(a) was used as a stand alone plate and failed completely when struck by a 0.50 caliber FSP at a velocity as low as 0.066 km/sec. In Example 13(b), even when bonded to a 12.7 mm thick aluminum backing plate, the test plate was completely shattered when struck by a 0.30 caliber FSP at a velocity of 1.344 km/sec. The reinforced test materials in Examples 14 and 15 (used as stand alone plates) showed better ballistic performance than Example 13, but the average calculated armor mass efficiencies

were only:

$e_m$ 0.49 (Relative to 5083 Aluminum)
$e_m$ 0.56 (Relative to RHA steel)

These figures are substantially lower than those in Example 6.

### Table 4

| Components, Weight Percent | Example Numbers | | |
|---|---|---|---|
| | 13 | 14 | 15 |
| Portland Cement, Type 1 | 15.1 | - | - |
| Portland Cement, Class H | - | 24.71 | 24.71 |
| Gravel (1 cm) | 45.3 | - | - |
| Sand | 30.2 | - | - |
| 316 Stainless Steel, 80/200 Mesh | - | 34.32 | 25.74 |
| 434 Stainless Steel Fiber | - | 17.16 | 25.74 |
| Silica, Min-U-Sil | - | 12.16 | 12.16 |
| Silica Fume | 2.8 | 3.43 | 3.43 |
| M-100 Superplasticizer | 0.3 | 0.69 | 0.69 |
| Water | 6.2 | 7.53 | 7.53 |

Examples 16-19

The following examples demonstrate the use of high strength chemically bonded ceramic composites for the development of engineering designs of armor systems.

Example 16

The chemically bonded ceramic composition of Example 5 is molded into the cavity between a conventional ceramic plate and a steel plate. The chemically bonded ceramic is cured at 80°C in contact with the steel and ceramic plates to form a high strength laminated composite armor such as shown in Figure 1.

Example 17

(a) The chemically bonded ceramic material is intruded or otherwise molded into the interstices between a close-packed arrangement of alumina ceramic balls contained in a cavity of suitable shape. The ceramic balls are selected for maximum compressive strength and hardness. The sizes of the balls may be uniform or alternatively in graded sizes in order to optimize the density of close-packing. In general, the sizes of the largest ceramic balls are determined by the diameter of the potential projectile threat. The balls are encased and rigidly held together by the chemically bonded ceramic mixture of Example 5.

(b) The procedure in Example 17(a) is repeated using glass balls chosen for their high compressive strength and dilatant properties.

(c) The procedure in Example 17(a) is repeated using the reinforced castable mixture of Example 14 which is infiltrated around the balls under vibration.

(d) The procedure in Example 17(c) is repeated using glass balls.

The above-identified chemically bonded ceramic materials are cured at 80°C to form high strength composite armor plates such as shown in Figure 2.

## Example 18

A high strength armor plate is made in accordance with Figure 3 by molding of the chemically bonded ceramic composition of Example 3 into a uniform square cavity of 3 cm in width and which has slabs of conventional ceramic held rigidly by the end walls of the mold. The ceramic slabs are set at an angle of 45 degrees. The chemically bonded ceramic is introduced into the mold so as to completely fill the voids around the slabs. Then the chemically bonded ceramic material is cured at 80°C to produce a high strength composite armor plate as shown in Figure 3.

## Example 19

A metal grille work that consists of three steel plates that have a network of holes drilled through each plate are arranged in a mold having a suitable cavity thickness, so that the holes and the joining metal plates are not in alignment. The metal plates may be held in spaced relationship by metal spacers. The chemically bonded ceramic material of Example 3 is injected into the open spaces around the metal grille until the mold is completely filled with the chemically bonded ceramic material. The chemically bonded ceramic is then cured at 80°C, and the high strength armor plate is removed from the mold.

**TABLE 5**

| Example Number | Flexure Strength (MPa) | Thickness (mm) | Areal Density (kg/sq m) | FSP Caliber | Impact Velocity (km/sec) | Remarks |
|---|---|---|---|---|---|---|
| 13(a) | 11 | 12.7 | 30.6 | 0.50 | 0.066 | Complete Penetration and Plate Shattered |
| (b) | | 13.0* | 64.9 | 0.30 | 1.344 | Plate Shattered |
| 14(a) | 48 | 25.4 | 85.4 | 0.30 | 1.009 | Partial Penetration |
| (b) | | 25.4 | 84.9 | 0.30 | 1.104 | Complete Penetration |
| 15(a) | 48 | 27.2 | 85.1 | 0.30 | 1.047 | Complete Penetration |
| (b) | | 27.2 | 85.3 | 0.30 | 1.039 | Partial Penetration |

*Bonded to 12.7 mm Aluminum Plate

## Claims

1. An armor material comprising:
   (1) a high strength chemically bonded ceramic, and
   (2) an additional constituent comprising
   (a) high strength, high modulus fibers that increase the fracture toughness and multi-hit capability of the armor materials, and/or
   (b) hard aggregates which blunt, deflect and/or erode penetrators that strike the armor.

2. The armor material of Claim 1 wherein the fibers are metal.

3. The armor material of Claim 1 wherein the fibers are stainless steel.

4. The armor material of Claim 1 wherein the fibers are glass or ceramic fibers.

5. The armor material of Claim 1 wherein the fibers are polymeric fibers or carbon fibers.

6. The armor material of Claim 1 wherein the aggregate is metal.

7. The armor material of Claim 1 wherein the aggregate is stainless steel.

8. The armor material of Claim 1 wherein the aggregate is at least one of glass, alumina, boron carbide, silicon carbide and beryllium oxide.

9. A multi-component armor comprising segments of various sizes, shapes and materials embedded in a composition comprising a high strength chemically bonded ceramic, wherein said composition comprises an additional constituent comprising

(a) high strength, high modulus fibers, and/or

(b) hard aggregates.

10. The multi-component armor of Claim 9, wherein said composition comprises an additional constituent comprising high strength, high modulus, high temperature resistant fibers.

11. The multi-component armor of Claim 9 wherein the segment is a plate of a hard material.

12. The multi-component armor of Claim 9 wherein the segment is a metal grille.

13. The multi-component armor material of Claim 9 wherein the fibers are metal.

14. The multi-component armor material of Claim 9 wherein the fibers are stainless steel.

15. The multi-component armor material of Claim 9 wherein the fibers are glass or ceramic fibers.

16. The multi-component armor material of Claim 9 wherein the fibers are polymeric fibers or carbon fibers.

17. The multi-component armor material of Claim 9 wherein the aggregate is metal.

18. The multi-component armor material of Claim 9 wherein the aggregate is stainless steel.

19. The multi-component armor material of Claim 9 wherein the aggregate is at least one of glass, alumina, boron carbide, silicon carbide and beryllium oxide.

20. A multi-component armor comprising a laminate wherein at least one of the layers of the laminate is a composition comprising a high strength chemically bonded ceramic, wherein said composition comprises an additional constituent comprising

(a) high strength, high modulus fibers, and/or

(b) hard aggregates.

21. The multi-component armor of Claim 20, wherein said composition comprises an additional constituent comprising high strength, high modulus, high temperature resistant fibers.

22. The multi-component armor of Claim 20 which has a second layer comprising conventional ceramic which is positioned on the face of the armor which receives the direct impact of a projectile.

23. The multi-component armor of Claim 22 which has a third layer comprising metal, which is positioned on the face of the armor opposite from the face which receives the direct impact of a projectile.

24. The multi-component armor of Claim 20 wherein the fibers are metal.

25. The multi-component armor of Claim 20 wherein the fibers are stainless steel.

26. The multi-component armor of Claim 20 wherein the fibers are ceramic fibers, glass fibers, polymeric fibers or carbon fibers.

27. The multi-component armor of Claim 20 wherein the aggregate is metal.

28. The multi-component armor of Claim 20 wherein the aggregate is stainless steel.

29. The multi-component armor of Claim 20 wherein the aggregate is at least one of glass, alumina, boron carbide, silicon carbide and beryllium oxide.

30. A multi-component armor comprising plates of a hard material embedded in a composition comprising a high strength chemically bonded ceramic.

31. The multi-component armor of Claim 30 wherein said composition comprises an additional constituent comprising

(a) high strength, high modulus fibers, and/or

(b) hard aggregates.

32. The multi-component armor of Claim 30 wherein the hard material is conventional ceramic.

33. The multi-component armor of Claim 32 wherein the ceramic plates are positioned at an angle to the face of the armor impacted by a projectile.

34. The multi-component armor of Claim 30 wherein the fibers are metal.

35. The multi-component armor of Claim 30 wherein the fibers are stainless steel.

36. The multi-component armor of Claim 30 wherein the fibers are ceramic fibers, glass fibers, polymeric fibers or carbon fibers.

37. The multi-component armor of Claim 30 wherein the aggregate is metal.

38. The multi-component armor of Claim 30 wherein the aggregate is stainless steel.

39. The multi-component·armor of Claim 30 wherein the aggregate is at least one of glass, alumina, boron carbide, silicon carbide and beryllium oxide.

40. A multi-component armor comprising a metal grill embedded in a composition comprising a high strength chemically bonded ceramic.

The multi-component armor of Claim 40, wherein the said composition comprises an additional constituent comprising

    (a) high strength, high modulus fibers, and/or

    (b) hard aggregates.

42. The multi-component armor of Claim 40 wherein the fibers are metal.

43. The multi-component armor of Claim 40 wherein the fibers are stainless steel.

44. The multi-component armor of Claim 40 wherein the fibers are ceramic fibers, or glass fibers or polymeric fibers or carbon fibers.

45. The multi-component armor of Claim 40 wherein the aggregate is metal.

46. The multi-component armor of Claim 40 wherein the aggregate is stainless steel.

47. The multi-component armor of Claim 40 wherein the aggregate is at least one of glass, alumina, boron carbide, silicon carbide and beryllium oxide.

*FIG. 1*

*FIG. 2*

FIG. 3

PROJECTILE
47

43

41

40

FIG. 4

FIGURE 5

067-080-2

.30 Caliber FSP

4118-4188 ft/sec

FIGURE 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y,D | US-A-4 353 748 (J.D. BIRCHALL et al.) <br> * Column 1, lines 8-55; claims 1-15 * <br> --- | 1,20 | F 41 H 5/04 |
| Y | US-A-2 381 779 (F.S. SCOTT) <br> * Page 1, left-hand column, line 51 - page 3, left-hand column, line 15; figures * <br> --- | 1,20 | |
| Y,D | US-A-4 482 385 (J.A. SATKOWSKI et al.) <br> * Claims 1-15 * | 9,11,12 ,17,18, 30,31, 37,38, 40,41, 45,46 | |
| A,D | <br> --- | 6,7,27, 28 | |
| Y | BE-A- 877 585 (INDUSTRIE-WERKE) <br> * Claims 1-4; figures 1,2 * | 9,11,12 ,17,18, 30,31, 37,38, 40,41, 45,46 | |
| | | | **TECHNICAL FIELDS SEARCHED (Int. Cl.4)** |
| A,D | <br> --- <br> D.J. HANNANT: "FIBRE CEMENTS AND FIBRE CONCRETE" 1978, John Wiley & Sons, London, GB; <br> * Contents; chapter 1, "Introduction" * <br> --- | 2-5,13- 16,21, 24-26, 34-36, 42-44 | F 41 H |
| A | US-A-3 730 826 (B. MATCHEN) <br> * Claims 1-9 * <br> --- -/- | 8,19,22 ,23,29, 39,47 | |

The present search report has been drawn up for all claims

| Place of search | Date of completion of the search | Examiner |
|---|---|---|
| THE HAGUE | 03-07-1988 | ERNST R.T. |

EPO FORM 1503 03.82 (P0401)

European Patent Office

# EUROPEAN SEARCH REPORT

Application Number

EP 88 10 5734

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 566 448 (FELDMÜHLE AG) * Page 2, right-hand column, last paragraph – page 3, left-hand column, paragraph 4; figures 1-3 * ----- | 32,33 | |

TECHNICAL FIELDS
SEARCHED (Int. Cl.4)

The present search report has been drawn up for all claims

| Place of search | Date of completion of the search | Examiner |
|---|---|---|
| THE HAGUE | 03-07-1988 | ERNST R.T. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                    

& : member of the same patent family, corresponding
    document

EPO FORM 1503 03.82 (P0401)